# EUROPEAN PATENT APPLICATION

(11) **EP 4 564 042 A1**
(43) Date of publication of application: **04.06.2025**
(21) Application number: 22957486.8
(22) Date of filing: 30.08.2022
(51) Int. Cl.: G01S 5/06, G01S 5/02, H04W 4/80

(54) **METHOD AND DEVICE FOR COOPERATIVE POSITIONING USING UWB COMMUNICATION**

(71) Applicant: Samsung Electronics Co., Ltd., Suwon-si, Gyeonggi-do 16677 (KR)
(72) Inventor: OH, Hyunseob, Suwon-si Gyeonggi-do 16677 (KR); SEO, Seungbeom, Suwon-si Gyeonggi-do 16677 (KR); HAN, Jinkyu, Suwon-si Gyeonggi-do 16677 (KR); SEO, Jinwook, Suwon-si Gyeonggi-do 16677 (KR)
(74) Representative: Gulde & Partner
(86) International application number: PCT/KR2022/012981
(87) International publication number: WO 2024/048807

(57) **Abstract**

The present disclosure provides a method for providing a service by using an ultra wide band (UWB) communication. The method for a first UWB device, according to an embodiment of the present disclosure, comprises the steps of: receiving a downlink time difference of arrival (DL-TDoA) message from at least one UWB anchor through a UWB channel; confirming on the basis of the DL-TDoA message that positioning of the first UWB device has failed; receiving a ranging message including position information about a second UWB device from the second UWB device; and measuring the position of the first UWB device on the basis of the DL-TDoA message and the position information about the second UWB device.

## Description

### [Technical Field]

The disclosure relates to UWB communication and, more specifically, to a method in which devices cooperatively perform positioning using UWB communication.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra wide band (UWB).

### [Detailed Description of the Invention]

### [Technical Problem]

The disclosure discloses a method in which a UWB device incapable of receiving sufficient anchor signals in a service area estimates its position through cooperative positioning with another UWB device.

### [Technical Solution]

A method by a first ultra wide band (UWB) device according to an embodiment of the disclosure may comprise receiving a downlink time difference of arrival (DL-TDoA) message from at least one UWB anchor through a UWB channel, identifying a failure in position measurement of the first UWB device based on the DL-TDoA message, receiving, from a second UWB device, a ranging message including position information about the second UWB device, and measuring a position of the first UWB device based on the position information about the second UWB device and the DL-TDoA message.

According to an embodiment, the method by the first UWB device may further comprise transmitting a message requesting cooperative positioning to the second UWB device.

According to an embodiment, the ranging message may be received through the UWB channel, the ranging message may be received through a narrow band (NB) channel, or the ranging message may be received through Wi-Fi neighbor awareness networking (NAN)-based fine time measurement (FTM).

According to an embodiment, the position information about the second UWB device may include a latitude of the second UWB device, a longitude of the second UWB device, and an altitude of the second UWB device. According to another embodiment, the position information about the second UWB device may include an X-coordinate value in millimeters in a set coordinate system, a Y-axis coordinate value in millimeters in the coordinate system, and a Z-axis value in millimeters in the coordinate system.

A method by a second ultra wide band (UWB) device according to an embodiment of the disclosure may comprise receiving a downlink time difference of arrival (DL-TDoA) message from at least one UWB anchor through a UWB channel, identifying a success in position measurement of the second UWB device based on the DL-TDoA message, and transmitting a ranging message including position information about the second UWB device to a first UWB device failing in position measurement based on the DL-TDoA message.

A first ultra wide band (UWB) device according to an embodiment of the disclosure may comprise a transceiver and a processor. The processor may control to receive a downlink time difference of arrival (DL-TDoA) message from at least one UWB anchor through a UWB channel, identify a failure in position measurement of the first UWB device based on the DL-TDoA message, receive, from a second UWB device, a ranging message including position information about the second UWB device, and measure a position of the first UWB device based on the position information about the second UWB device and the DL-TDoA message.

A second ultra wide band (UWB) according to an embodiment of the disclosure may comprise a transceiver and a processor. The processor may control to receive a downlink time difference of arrival (DL-TDoA) message from at least one UWB anchor through a UWB channel, identify a success in position measurement of the second UWB device based on the DL-TDoA message, and transmit a ranging message including position information about the second UWB device to a first UWB device failing in position measurement based on the DL-TDoA message.

### [Advantageous Effects]

The method and device according to an embodiment of the disclosure may allow a UWB device, which fails in position measurement due to a failure in receiving sufficient anchor signals in a service area, to efficiently measure its position through cooperative positioning with another UWB device.

### [Brief Description of the Drawings]

FIG. 1 illustrates an example architecture of a UWB device according to an embodiment of the disclosure;
FIG. 2 illustrates an example configuration of a framework of a UWB device according to an embodiment of the disclosure;
FIG. 3A illustrates an example of a ranging block structure according to an embodiment of the disclosure;
FIG. 3B illustrates a structure of a ranging round according to an embodiment of the disclosure;
FIG. 4 illustrates various examples of a UWB ranging method according to an embodiment of the disclosure;
FIG. 5A illustrates a method for a UWB device to perform UWB ranging in a DL-TDoA scheme according to an embodiment of the disclosure;
FIG. 5B illustrates an example of a ranging block structure for a downlink TDoA scheme according to an embodiment of the disclosure;
FIG. 6 illustrates a process in which a UWB device failing in positioning calculates its position using TWR-based cooperative positioning according to an embodiment of the disclosure;
FIG. 7 illustrates a process in which a UWB device failing in positioning calculates its position using DL-TDoA-based cooperative positioning according to an embodiment of the disclosure;
FIG. 8 illustrates an example in which a UWB device failing in positioning performs cooperative positioning using an in-band channel according to an embodiment of the disclosure;
FIG. 9 illustrates an example in which a UWB device failing in positioning performs cooperative positioning using an NB channel according to an embodiment of the disclosure;
FIG. 10 illustrates an example in which a UWB device failing in positioning performs cooperative positioning using a Wi-Fi NAN according to an embodiment of the disclosure;
FIG. 11A is a view illustrating a Wi-Fi NAN ranging architecture according to an embodiment of the disclosure;
FIG. 11B illustrates an example of performing FTM-based ranging according to an embodiment of the disclosure;
FIGS. 12A, 12B, 12C, and 12D illustrate examples of a message field regarding anchor location information according to an embodiment of the disclosure;
FIG. 13 illustrates a structure of a first UWB device according to an embodiment of the disclosure; and
FIG. 14 illustrates a structure of a second UWB device according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings. Further, although a communication system using UWB is described in connection with embodiments of the present invention, as an example, embodiments of the present invention may also apply to other communication systems with similar technical background or features. For example, a communication system using Bluetooth or ZigBee may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra wide band (UWB). A wireless network in which such a wireless network technology is implemented may include a plurality of electronic devices.

According to the definitions by the Federal Communications Commission (FCC), UWB may refer to a wireless communication technology that uses a bandwidth of 500 MHz or more or a bandwidth corresponding to a center frequency of 20% or more. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controlee information and UWB session data required for a UWB session.

"Controller" may be a ranging device that defines and controls ranging control messages (RCM) (or control messages). The controller may define and control ranging features by transmitting a control message.

"Controlee" may be a ranging device using a ranging parameter in the RCM (or control message) received from the controller. The controlee may use the same ranging features as those configured through control messages from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be, e.g., an applet executed on the secure component including UWB parameters and service data. The applet may be a FiRa applet.

"Ranging device" may be a device capable of performing UWB ranging. In the disclosure, the ranging device may be an enhanced ranging device (ERDEV) defined in IEEE 802.15.4z or a FiRa Device. The ranging device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. "UWB-enabled Application" may be abbreviated as an application or a UWB application. UWB-enabled Application may be a FiRa-enabled Application.

"Framework" may be a component that provides access to Profiles, individual-UWB configuration and/or notifications. "Framework" may be, e.g., a collection of logical software components including Profile Manager, OOB Connector, Secure Service, and/or UWB service. The framework may be a FiRa framework.

"OOB Connector" may be a software component for establishing an out-of-band (OOB) connection (e.g., BLE connection) between Ranging Devices. The OOB connector may be a FiRa OOB connector.

"Profile" may be a previously defined set of UWB and OOB configuration parameters. The profile may be a FiRa profile.

"Profile Manager" may be a software component that implements a profile available on the Ranging Device. The profile manager may be a FiRa profile manager.

"Service" may be an implementation of a use case that provides a service to an end-user.

"Smart Ranging Device" may be a ranging device that may implement an optional Framework API. The smart ranging device may be a FiRa smart device.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange. The initiator may initiate a ranging exchange by transmitting a first RFRAME (ranging exchange message).

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange. The responder may respond to the ranging exchange message received from the initiator.

"STS" may be a ciphered sequence for increasing the integrity and accuracy of ranging measurement timestamps. The STS may be generated from the ranging session key.

"Secure channel" may be a data channel that prevents overhearing and tampering.

"Secure Component" may be an entity (e.g., SE or TEE) having a defined security level that interfaces with UWBS for the purpose of providing RDS to UWBS, e.g., when dynamic STS is used.

"Secure Element (SE)" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or Trusted Execution Environment (TEE).

"Service Applet" may be an applet on a Secure Component that handles service specific transactions.

"Service Data" may be data defined by a service provider that needs to be transferred between two ranging devices to implement a service.

"Service Provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the Controller and the Controlee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controller.

"UWB session key" may be a key used to protect the UWB Session. The UWB Session Key may be used to generate the STS. The UWB session key may be a UWB ranging session key (URSK), and may be abbreviated as a session key.

"UWB Subsystem (UWBS)" may be a hardware component implementing the UWB PHY and MAC layers specifications. UWBS may have an interface to Framework and an interface to Secure Component to search for RDS.

* "UWB message" may be a message including a payload information element (IE) transmitted by the UWB device (e.g., ERDEV).

"Payload IE" may be an IE included in the MAC payload of the UWB MAC frame. The MAC payload may include one or more payload IEs.

* "Scheduled-based ranging" may be used for the ranging round scheduled by the controller for the controlees to transmit ranging frames (RFRAMEs) and/or measurement reports in different ranging slots. Scheduling-based ranging may be referred to as time-scheduled ranging. A scheduling mode in which scheduling-based ranging is used may be referred to as a time-scheduled mode.

"Contention-based ranging" may be used when the controller does not know the MAC addresses of controlees participating in the UWB session (ranging session). In contention-based ranging, the controller may be an initiator and may perform ranging with other unknown UWB devices. The scheduling mode in which contention-based ranging is used may be referred to as a contention-based mode.

The contention-based ranging may be used for the ranging round in which the controller determines the size of the contention access period and indicates the CAP size through a ranging control message. The CAP may be referred to as a contention window or a contention window period.

In the contention-based mode, the UWB device may operate as a controller and an initiator, and in this case, the ranging control phase (RCP) and the ranging initiation phase (RIP) may be merged into one phase (e.g., RIP). In the ranging phase (RP), the allocation of the CAP size may determine the CAP period for the responder(s) participating in the corresponding ranging round in units of ranging slots. Each responder may randomly determine one slot in the CAP to transmit a ranging response message (RRM). Messages used in contention-based ranging may use SP1 as an RFRAME configuration.

"Hybrid ranging" may be used when there is a known controlee and an unknown controlee. As described above, the known controlee may be a controlee whose MAC address is known to the controller, and the unknown controlee may be a controlee whose MAC address is not known to the controller. In this disclosure, hybrid ranging may be referred to as hybrid-based ranging. The scheduling mode in which hybrid ranging is used may be referred to as a hybrid-based mode.

In the hybrid-based mode, the controller may perform ranging with the known controlee in the scheduling-based mode and with the unknown controlee in the contention-based mode.

In the hybrid-based mode, the ranging round may include a ranging control phase RCP and a ranging phase RP. The RP may include a contention free period for scheduling-based ranging (access) and a contention access period (CAP) for contention-based ranging (access). The control message (ranging control message) used in the RCP of the hybrid-based mode may be referred to as a ranging management message (RMM).

* "Downlink Time Difference of Arrival (DL-TDoA, DT)" may be a positioning method for one or more tag devices (DT-Tag) to estimate their position based on the DL-TDoA message (DTM) received from at least one anchor device (DT-anchor). In DL-TDoA, the anchor device transmits or broadcasts the DTM, and the tag device passively receives the DTM, thereby preventing exposure of the position of the tag device.

In DL-TDoA, the anchor device may precisely measure its own DTM transmission time and the reception time of the received DTM. The anchor device may include the transmission time in the DTM it transmits or broadcasts. The tag device may measure the reception times of all received DTMs and estimate its position by using the reception timestamps and obtained coordinates of the anchor devices. DL-TDoA may be classified as a type of one way ranging like Uplink TDoA. DL-TDoA may be referred to as DL-TDoA localization.

"Anchor device" may be a UWB device deployed at a specific position to provide a positioning service. For example, the anchor device may be a UWB device installed by a service provider on a wall, ceiling, structure, or the like in a room to provide an indoor positioning service. In DL-TDoA, the anchor device may be a device that transmits the DTM that the tag device may use to calculate the position based on TDoA localization (DL-TDoA localization). In DL-TDoA, the anchor devices may be divided into the initiator anchor and responder anchors according to the order and role of transmitting messages and participate in the ranging round. The anchor device may be referred to as a UWB anchor or a UWB anchor device. The anchor device of DL-TDoA may be referred to as a DL-TDoA anchor or DT-anchor.

The "initiator anchor" may notify of the initiation of the TDoA ranging round (DL-TDoA ranging round). In DL-TDoA, the initiator anchor may initiate a DL-TDoA ranging round by transmitting an initiation message and may schedule the transmission time of the responder anchor(s). For example, the initiator anchor may schedule the ranging slot in which the responder anchor(s) operating in the same ranging round sends a response message (response DTM). The initiation message may be referred to as an initiator DTM, a poll message, a poll DTM, or a first DTM. The initiator anchor may be referred to as an initiator UWB anchor, an initiator anchor device, or an initiator DT-anchor.

The initiator anchor may additionally transfer an end message (final DTM) message after receiving the response from the responder anchor(s). The initiator anchor may additionally transmit a final DTM after all responder anchors in the same cluster transmit a response message (response DTM) in the DL-TDoA ranging round. The end message may be referred to as final DTM or third DTM.

There may be at least one reference initiator anchor in the DL-TDoA network. The reference initiator anchor serves as a global time reference for inter-cluster synchronization as an initiator anchor, and may configure a common ranging block structure for the DL-TDoA network to operate. The reference initiator anchor may be referred to as a master anchor or a global anchor.

The responder anchor may be a UWB anchor responding to the initiation message of the initiator anchor. The responder anchor may respond to the initiator anchor with a response message. The response message may be referred to as a responder DTM, a response DTM, or a second DTM. The "responder anchor" may also be referred to as a Responder UWB anchor, a Responder UWB anchor device, a Responder anchor device, etc.

The "tag device" may estimate its position (e.g., geographical coordinates) by using TDoA measurement based on the DTM received from the anchor device in DL-TDoA. The tag device may previously know the position of the anchor device. The tag device may be referred to as a UWB tag, user equipment (UE), or UWB tag device, and the DL-TDoA tag device may be referred to as a DL-TDoA tag or a DT-tag.

The tag device may receive the message transmitted by the anchor device and measure the reception time of the message. The tag device may obtain the geographic coordinates of the anchor device through an in-band or out-band method. The tag device may skip the ranging block when the position update rate is lower than that supported by the network.

"Cluster" may mean a set of anchor devices covering a specific area. In DL-TDoA, cluster may mean a set of anchor devices that exchange DTMs to provide a position service to at least one tag device. The cluster may be constituted of an initiator anchor and at least one responder anchor.

One anchor device may operate in one or more clusters. In this case, the anchor device acting as an initiator anchor in some clusters may act as a responder anchor in other clusters. The cluster area may be a space formed by the anchor devices constituting the cluster. To support the positioning service for a wide area, a plurality of clusters may be configured to provide the positioning service to the UE. Cluster may be referred to as a cell.

When determined to make the subject matter of the present invention unnecessarily unclear, the detailed description of related known functions or features may be skipped in describing the disclosure.

Hereinafter, various embodiments of the disclosure are described with reference to the accompanying drawings.

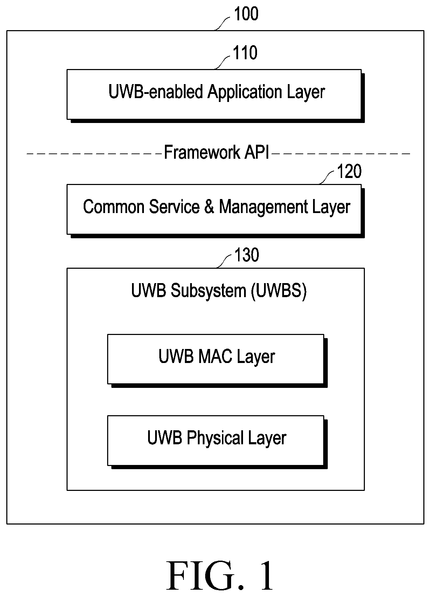

FIG. 1 illustrates an example architecture of a UWB device according to an embodiment of the disclosure.

In the disclosure, the UWB device 100 may be an electronic device supporting UWB communication. The UWB device 100 may be, e.g., a ranging device supporting UWB ranging. In an embodiment, the ranging device may be an enhanced ranging device (ERDEV) defined in IEEE 802.15.4z or a FiRa Device.

In the embodiment of FIG. 1, the UWB device 100 may interact with other UWB devices through a UWB session.

The UWB device 100 may implement a first interface (Interface #1) that is an interface between the UWB-enabled Application 110 and the Framework 120, and the first interface allows the UWB-enabled application 110 on the UWB device 100 to use the UWB capabilities of the UWB device 100 in a predetermined manner. In an embodiment, the first interface may be a Framework API or a proprietary interface, but is not limited thereto.

The UWB device 100 may implement a second interface (Interface #2) that is an interface between the UWB Framework 110 and the UWB subsystem (UWBS, 130). In an embodiment, the second interface may be a UWB Command Interface (UCI) or proprietary interface, but is not limited thereto.

Referring to FIG. 1, the UWB device 100 may include a UWB-enabled Application 110, a Framework (UWB Framework) 120, and/or a UWBS 130 including a UWB MAC Layer and a UWB Physical Layer. Depending on the embodiment, some entities may not be included in the UWB device, or additional entities (e.g., security layer) may be further included.

The UWB-enabled Application 110 may trigger establishment of a UWB session by a UWBS 130 through the first interface. The UWB-enabled Application 110 may use one of previously defined profiles (profile). The UWB-enabled Application 110 may use the first interface to handle related events, such as service discovery, ranging notifications, and/or error conditions.

The Framework 120 may provide access to Profiles, individual-UWB configuration and/or notifications. The Framework 120 may support at least one of a function for UWB ranging and transaction execution, a function to provide an interface to the application and UWBS 130, or a function to estimate the location of the device 100. The Framework 120 may be a set of software components. As described above, the UWB-enabled Application 110 may interface with the Framework 120 through the first interface, and the Framework 120 may interface with the UWBS 130 through the second interface.

Meanwhile, in the disclosure, the UWB-enabled Application 110 and/or Framework 120 may be implemented by an application processor (AP) (or processor). Accordingly, in the disclosure, the operation of the UWB-enabled Application 110 and/or the Framework 120 may be understood as performed by an AP (or a processor). In this disclosure, the framework may be referred to as an AP or a processor.

The UWBS 130 may be a hardware component including a UWB MAC Layer and a UWB Physical Layer. The UWBS 130 may perform UWB session management and may communicate with the UWBS of another UWB device. The UWBS 130 may interface with the Framework 120 through the second interface and may obtain the secure data from the Secure Component. In an embodiment, the Framework (or application processor) 120 may transmit a command to the UWBS 130 through UCI, and the UWBS 130 may transmit a response to the command to the Framework 120. The UWBS 130 may transfer a notification to the Framework 120 through the UCI.

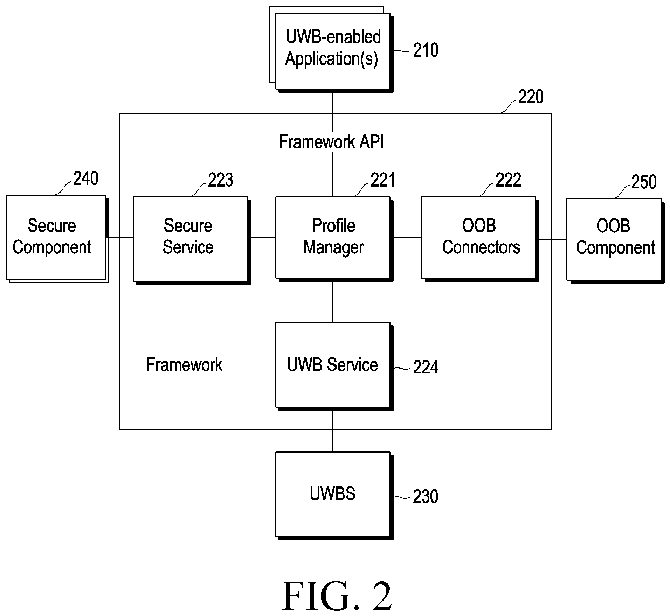

FIG. 2 illustrates an example configuration of a framework of a UWB device according to an embodiment of the disclosure.

The UWB device of FIG. 2 may be an example of the UWB device of FIG. 2.

Referring to FIG. 2, the Framework 220 may include, e.g., software components, such as Profile Manager 221, OOB Connector(s) 222, Secure Service 223 and/or UWB service 224.

The Profile Manager 221 may serve to manage profiles available on the UWB device. Profile may be a set of parameters required to establish communication between UWB devices. For example, a profile may include a parameter indicating which OOB secure channel is used, a UWB/OOB configuration parameter, a parameter indicating whether the use of a particular secure component is mandatory, and/or a parameter related to the file structure of the ADF. The UWB-enabled Application 210 may communicate with the Profile Manager 221 through the first interface (e.g., Framework (API)).

The OOB Connector 222 may serve to establish an OOB connection with another device. The OOB Connector 222 may handle an OOB step including a discovery step and/or a connection step. The OOB component (e.g., BLE component) 250 may be connected to the OOB connector 222.

The Secure Service 223 may play a role of interfacing with a Secure Component 240, such as SE or TEE.

The UWB Service 224 may perform a role of managing the UWBS 230. The UWB Service 224 may provide access to the UWBS 230 from the Profile Manager 221 by implementing the second interface.

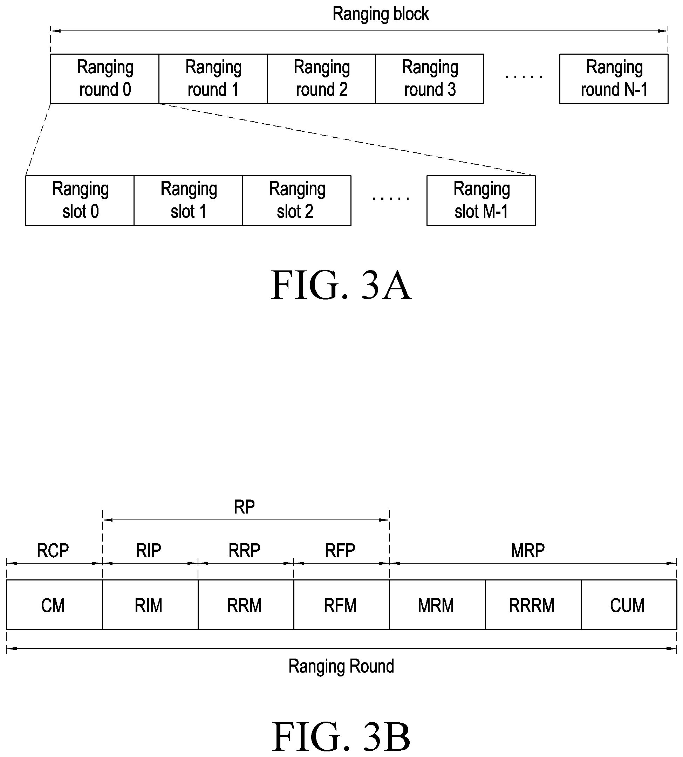

FIG. 3A illustrates an example of a ranging block structure according to an embodiment of the disclosure. FIG. 3B illustrates a structure of a ranging round according to an embodiment of the disclosure.

As shown in FIG. 3A, one ranging block may include at least one ranging round. Each ranging round may include at least one ranging slot. For example, as shown, one ranging block includes N ranging rounds (e.g., ranging round index 0 to ranging round index N-1), and ranging round #0 includes M ranging slots. (e.g., ranging slot 0 to ranging slot M).

The ranging block refers to a time period for ranging. The ranging round may be a period of sufficient duration to complete one entire range-measurement cycle (ranging cycle) in which a set of ranging devices participating in a ranging exchange involves. The ranging slot may be a sufficient period for transmission of at least one ranging frame (RFRAME) (e.g., ranging initiation/reply/final message, etc.).

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The ranging block may be abbreviated as a block, the ranging round as a round, and the ranging slot as a slot.

Referring to FIG. 3B, one ranging round may include a ranging control phase (RCP), a ranging phase (RP), and/or a measurement report phase (MRP). For example, one ranging round may include one slot for the RCP, at least one slot for the RP, and/or at least one slot for the MRP.

According to an embodiment, some of the above-described phases may not be included in the ranging round, or additional phases may be further included in the ranging round. For example, the RCP may not be included in the ranging round. In this case, the ranging control message (RCM) may be merged with the ranging initiation message (RIM). For example, a ranging control update phase (RCUP) and/or a ranging interval update phase (RIUP) may be further included in the ranging round.

The RCP may be a phase in which the controller transmits RCM. The RCM may be a message transmitted by the controller to set ranging parameters. In an embodiment, the RCM may be transmitted in the first slot (slot #0) of the ranging round. The RCM may be abbreviated as control message (CM).

The RP may include a ranging initiation phase (RIP), a ranging response phase (RRP), and/or a ranging final phase (RFP).

The RIP may be a phase in which initiator(s) transmit RIM(s) to responder(s).

The RRP may be a phase in which the responder(s) transmit their ranging response message (RRM)(s) to the initiator.

The RFP may be a phase in which an initiator transmits ranging final message(s) (RFM(s)) to responder(s). The ranging final phase may only be used for DS-TWR.

The MRP may be a phase in which participating ranging devices exchange service information related to ranging measurement. In MRP, a measurement report message (MRM), a ranging result report message (RRRM), and/or a control update message (CUM) may be transmitted. The MRM may be a message transmitted by the UWB device to exchange measurement information. The RRRM may be a message transmitted by the UWB device for reporting the ranging result. The CUM may be a message transmitted by the controller to update control information. The CUM may be referred to as a ranging control update message (RCUM).

The RCUP may be a phase in which the controller transmits a ranging control update message (RCUM). The ranging control update phase may be included in the last slot of the set of ranging rounds designated by the RCM. The RCUM may be a message transmitted by the controller to update ranging parameters for the next ranging round(s). The RCUM may be transmitted in the last slot of the ranging round(s) designated by the RCM. The RCUM may include some or all of the information elements (IEs) employed by the RCM to update the values of parameters.

The ranging interval update phase (RIUP) may be a phase in which the controller transmits a ranging interval update message (RIUM). The RIUM may be a message transmitted by the controller to help synchronization between participating ranging devices or to update the interval between ranging blocks. The RIUM includes the scheduled time of the first RIUM. The RIUM may include the scheduled time of the next RIUM before the next ranging block starts.

If necessary, the plurality of predetermined UWB messages may be merged into one message. For example, the RCM may be merged with the RIM and transported in the RIP. For example, in the case of non-deferred DS-TWR ranging, the RFM may be merged with the MRM and transmitted in the RFP.

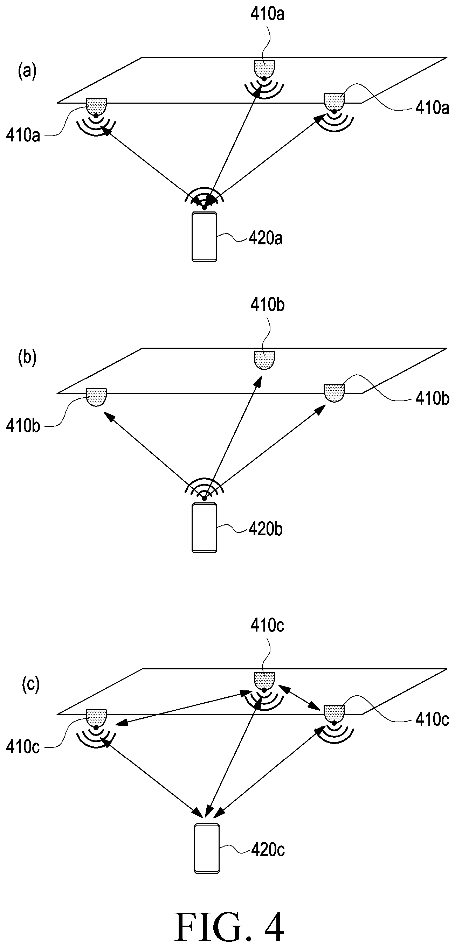

FIG. 4 illustrates various examples of a UWB ranging method according to an embodiment of the disclosure.

Part (a) of FIG. 4 illustrates an example of a two-way ranging (TWR) scheme, part (b) of FIG. 4 illustrates an example of an uplink TDoA (UL-TDoA) scheme which is a type of OWR, and part (c) of FIG. 4 illustrates an example of a downlink TDoA (DL-TDoA) scheme which is a type of OWR.

Referring to part (a) of FIG. 4, the UWB device 420a of the user may perform ranging with at least one UWB anchor 410a through ranging exchange using a plurality of ranging messages. Through the ranging exchange, the time of flight (ToF) may be calculated, and the distance between the two devices may be estimated.

The UWB device 420a may perform single-sided two-way ranging (SS-TWR) or double-sided two-way ranging (DS-TWR) with the UWB anchor 410a. When performing the TWR, the UWB device 420a may serve as an initiator or a responder.

In an embodiment, the TWR may be performed according to a contention-based mode and/or a scheduling-based mode.

Referring to part (b) of FIG. 4, a user's UWB device (UWB tag) 420a may transmit (broadcast) a ranging message to at least one UWB anchor 410b, and the at least one UWB anchor 410b may obtain a TDoA based on the received ranging message and estimate the position of the UWB device 420b based on the TDoA. The TDoA scheme of the embodiment of part (b) of FIG. 4 may be referred to as an uplink TDoA (UL-TDoA) scheme.

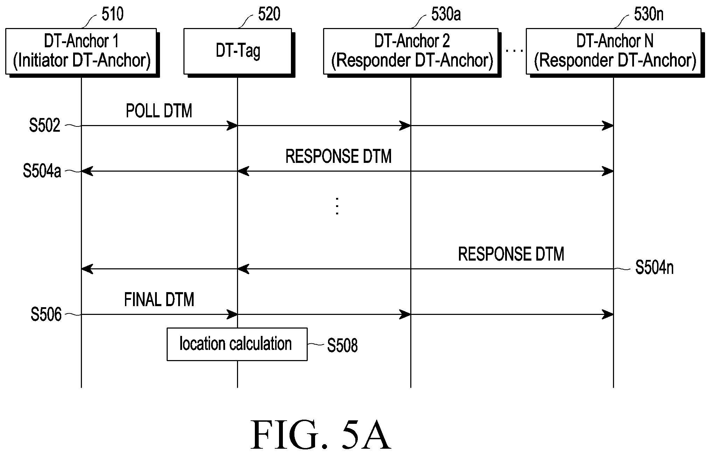

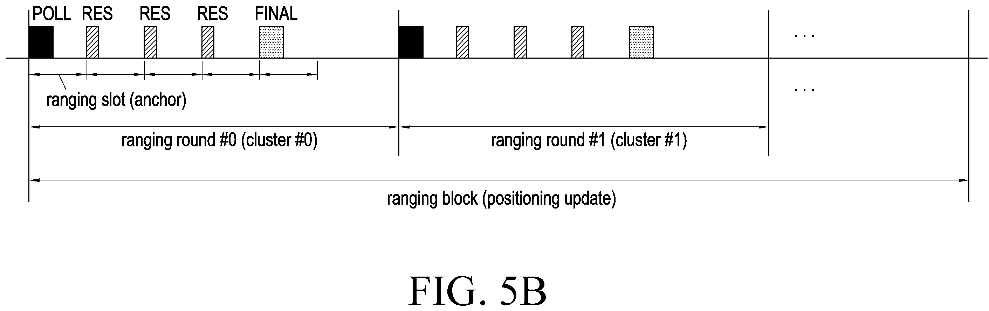

Referring to part (c) of FIG. 4, the UWB device (UWB tag or DT-tag) 420c of the user may estimate its position by receiving ranging messages transmitted/received by at least one UWB anchor 410c. An example of such a DL-TDoA scheme is described below with reference to FIGS. 5A and 5B.

FIG. 5A illustrates a method for a UWB device to perform UWB ranging in a DL-TDoA scheme according to an embodiment of the disclosure.

The embodiment of FIG. 5A assumes that one initiator anchor (initiator DT-anchor) 510 and n responder anchors 530a... 530n operate as UWB anchors (DT-anchors). However, the embodiment is not limited thereto, and the number of initiator anchors and responder anchors may be varied according to embodiments.

In operation S502, the initiator anchor 510 may initiate a DL-TDoA round by transmitting or broadcasting the poll DTM received by the responder anchor in the cluster. The poll DTM may include scheduling information for each responder anchor to transmit the response DTM in the allocated ranging slot.

In an embodiment, all responder anchors 530a,... 530n may reference the scheduling information in the poll DTM, thereby knowing whether to transmit the response DTM and the slot (slot index) used to transmit the response DTM.

In operations S504a,..., S504n, all responder anchors 530a,..., 530n receiving the poll DTM may respond to the initiator anchor 510 using the response DTM in the ranging slot allocated by the poll DTM. For example, each responder anchor 530a,..., 530n may transmit or broadcast the response DTM in its ranging slot allocated by the poll DTM.

In operation S506, the initiator anchor 510 receiving the response DTMs may additionally transmit the final DTM to the responder anchors 530a,..., 530n. For example, the initiator anchor 510 may transmit or broadcast the final DTM after receiving response DTMs from responder anchors 530a,..., 530n.

In operation S508, the tag device (DT-Tag) 520 may receive (or overhear) the poll DTM, response DTMs, and final DTM and calculate the TDoA values through the information included in the message and the reception timestamp. The tag device 520 may obtain (or estimate) its position based on the calculated TDoA values. Thus, the tag device 520 may estimate its own position without exposing its own position.

FIG. 5B illustrates an example of a ranging block structure for a downlink TDoA scheme according to an embodiment of the disclosure.

The ranging block structure of FIG. 5B may be an example of a ranging block structure for performing the ranging scheme of FIG. 5A.

Referring to FIG. 5B, the ranging block may include a plurality of ranging rounds.

As an embodiment, the ranging block may include a plurality of ranging rounds allocated for each of the plurality of clusters. For example, when n clusters are deployed, the ranging block may include a first ranging round allocated for a first cluster, a second ranging round allocated for a second cluster,... and an nth ranging round allocated for an nth cluster. Although not shown in FIG. 5B, according to an embodiment, a plurality of ranging rounds may be allocated to one cluster, or one ranging round may be allocated to a plurality of clusters.

In an embodiment, a ranging round may include a plurality of ranging slots. The ranging round may include a plurality of ranging slots allocated for each ranging message transmitted by the anchor devices belonging to the cluster associated with the ranging round. For example, if the first cluster includes one initiator anchor and three responder anchors, the ranging round for the first cluster may include a first ranging slot (e.g., ranging slot index 0) allocated for transmission/reception of the Poll message of the Initiator anchor included in the first cluster, a second ranging slot allocated for transmission/reception of the response message of the first Responder anchor, a third ranging slot allocated for transmission/reception of the response message of the second Responder anchor, a fourth ranging slot allocated for transmission/reception of the response message of the third Responder anchor, and a fourth ranging slot allocated for transmission/reception of the final message of the Initiator anchor.

In this scheme, ranging slots may be allocated to the ranging round for each cluster.

Through the ranging block structure as in the embodiment of FIG. 5B, the anchor devices of each cluster may exchange ranging messages in one cycle through their own ranging rounds in one ranging block, and the UE (tag device) may receive these ranging messages and calculate its position. Such an operation may be repeated for each ranging block. Thus, the location of the UE may be updated in the period of the ranging block.

On the other hand, according to the installation and/or attachment circumstance (e.g., relatively low installation density) of UWB anchors during DL-TDoA operation in the service area, at least one UWB device (or mobile terminal) in the service area may belong to a shadow area where anchor signals may not be temporarily received (or overhauled).

The disclosure proposes a method in which a UWB device positioned in a shadow area where an anchor signal may not be temporarily received during DL-TDoA operation receives at least one of ranging information and positioning information through communication with at least one peripheral device and obtains (or estimates) its position based on the received information.

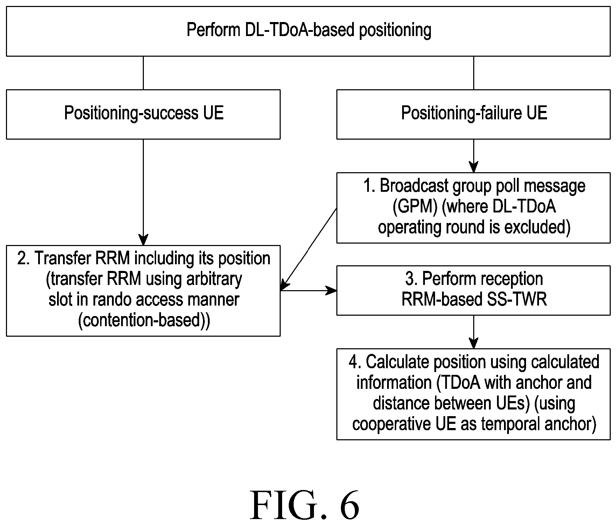

FIG. 6 illustrates a process in which a UWB device failing in positioning calculates its position using TWR-based cooperative positioning according to an embodiment of the disclosure.

During DL-TDoA operation, a pre-ranging procedure may be configured for a UWB device positioned in a shadow area where an anchor signal may not be received to communicate with at least one peripheral device. According to an embodiment, the UWB device positioned in the shadow area may form a ranging group to communicate with at least one peripheral device without a discovery procedure. According to an embodiment, a scheduling scheme for the UWB devices in the ranging group may be set in advance.

Referring to FIG. 6, a plurality of UWB devices may perform DL-TDoA-based positioning (e.g., obtaining (or estimating) its position).

A user equipment (UE) failing in DL-TDoA-based positioning (or a positioning-failure UE) may broadcast a group poll message (GPM). According to an embodiment, DL-TDoA operating rounds may be excluded during GPM broadcasting.

A UE succeeding in DL-TDoA-based positioning (or positioning-success UE) may receive the GPM broadcasted by the positioning-failure UE and transmit a ranging response message (RRM) including its own position information to the positioning-failure UE in response to the GPM. According to an embodiment, the positioning-success UE may transmit the RRM to the positioning-failure UE using an arbitrary slot in a random access manner (contention-based). According to an embodiment, the positioning-success UE may use an STS configured to mitigate interference and/or collision during RRM transmission.

The positioning-failure UE may perform SS-TWR based on the RRM received from the positioning-success UE. The positioning-failure UE may calculate its own position using the calculated information (TDoA to anchor or distance between UEs). (i.e., uses the positioning-success UE as a temporal anchor)

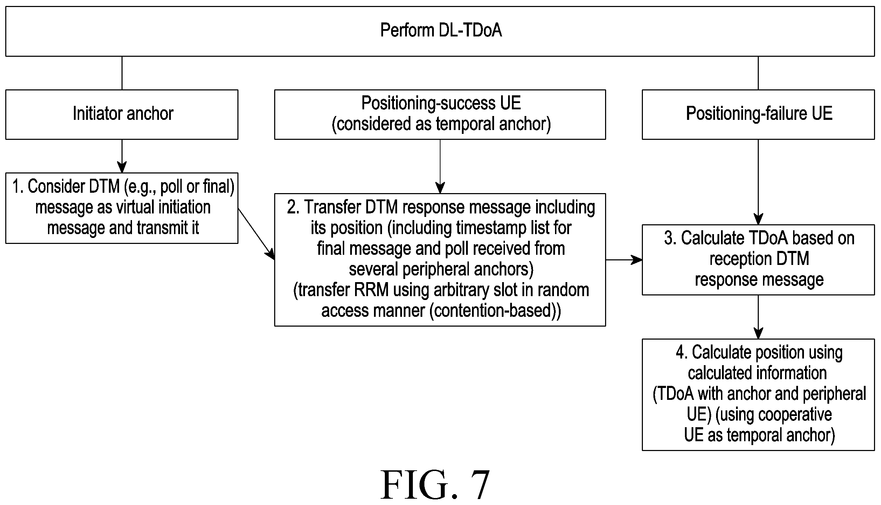

FIG. 7 illustrates a process in which a UWB device failing in positioning calculates its position using DL-TDoA-based cooperative positioning according to an embodiment of the disclosure.

During DL-TDoA operation, a pre-ranging procedure may be configured for a UWB device positioned in a shadow area where an anchor signal may not be received to communicate with at least one peripheral device. According to an embodiment, the UWB device positioned in the shadow area may form a ranging group to communicate with at least one peripheral device without a discovery procedure. According to an embodiment, a scheduling scheme for the UWB devices in the ranging group may be set in advance.

Referring to FIG. 7, a plurality of UWB devices may perform DL-TDoA-based positioning (e.g., obtaining (or estimating) its position).

The initiator anchor may consider a DL-TDoA message (DTM) (e.g., a poll message or a final message) as a virtual initiation message and transmit it.

The positioning-success UE (considered as a temporal anchor) may transmit a DTM response message including at least one of its position information and a timestamp list for a poll and final message received from several nearby anchors to the positioning-failure UE. According to an embodiment, the positioning-success UE may transmit a DTM response message to the positioning-failure UE using an arbitrary slot in a random access manner (contention-based). According to an embodiment, the positioning-success UE may use an STS configured to mitigate interference and/or collision when transmitting a DTM response message.

The positioning-failure UE may calculate the TDoA based on the DTM response message received from the positioning-success UE. The positioning-failure UE may calculate its position using the calculated information (TDoA with the anchor and the peripheral UE). (i.e., uses the positioning-success UE as a temporal anchor)

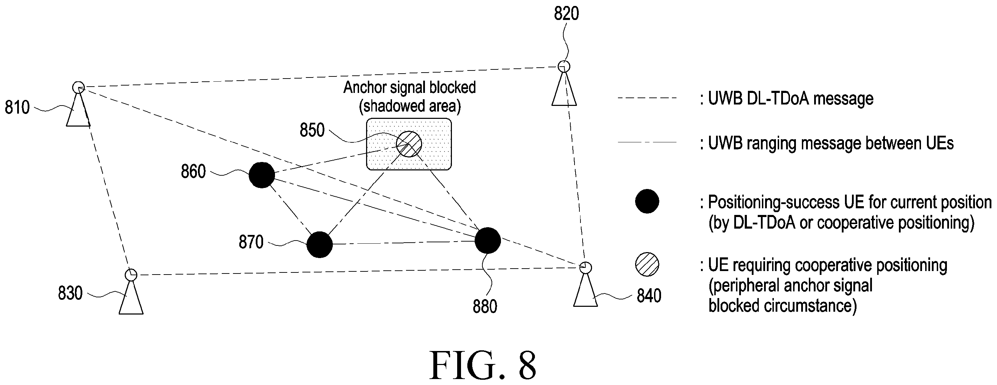

FIG. 8 illustrates an example in which a UWB device failing in positioning performs cooperative positioning using an in-band channel according to an embodiment of the disclosure.

Referring to FIG. 8, each of the plurality of UWB anchors 810 to 840 in the cluster may transmit and receive a UWB DL-TDoA message, and each of the plurality of UWB devices 850 to 880 may transmit and receive a ranging message using a UWB in-band channel.

According to an embodiment, anchor signals (e.g., poll DTM, response DTM, or final DTM) may be transmitted and received between the plurality of UWB anchors 810 to 840 in the cluster.

According to an embodiment, the first UWB device 850 may receive (or overhear) anchor signals (e.g., poll DTM, response DTM, or final DTM) between the plurality of UWB anchors 810 to 840, and calculate TDoA values through the information included in the message and the reception timestamp to attempt positioning for its current position. When the first UWB device 850 does not receive a sufficient number of anchor signals required for positioning calculation, the first UWB device 850 may fail in positioning for the current position.

According to an embodiment, the first UWB device 850 may request cooperative positioning from at least one of the peripheral devices 860 to 880 using the UWB in-band channel. The first UWB device 850 may attempt positioning for its current position based on a ranging result value obtained through the UWB TWR with at least one of the peripheral devices 860 to 880 and/or a result value of performing DL-TDoA using at least one of the UWB anchors 810 to 840 as a positioning infrastructure. According to an embodiment, the first UWB device 850 may calculate the TDoA using, e.g., the position of a peripheral UE that has succeeded in positioning and a ranging value with the peripheral UE (used as a temporal anchor).

Each of the first UWB device to fourth UWB device 860 to 880 may receive (or overhear) anchor signals (e.g., poll DTM, response DTM, or final DTM) between the plurality of UWB anchors 810 to 840, and calculate TDoA values through the information included in the message and the reception timestamp. Each of the second to fourth UWB devices 860 to 880 may obtain (or estimate) a position thereof using the calculated TDoA values. Accordingly, each of the second UWB device to the fourth UWB device 860 to 880 may estimate its position without exposing its position and succeed in positioning for the current position.

According to an embodiment, at least one of the second to fourth UWB devices 860 to 880 may secondarily correct its position based on a message from a peripheral UWB device and a value of the result of performing DL-TDoA using at least one of the UWB anchors 810 to 840 as a positioning infrastructure. According to an embodiment, at least one of the second to fourth UWB devices 860 to 880 may calculate the DL-TDoA-based position by considering the peripheral UWB device (or UE) that has succeeded in positioning as a virtual DL-TDoA anchor.

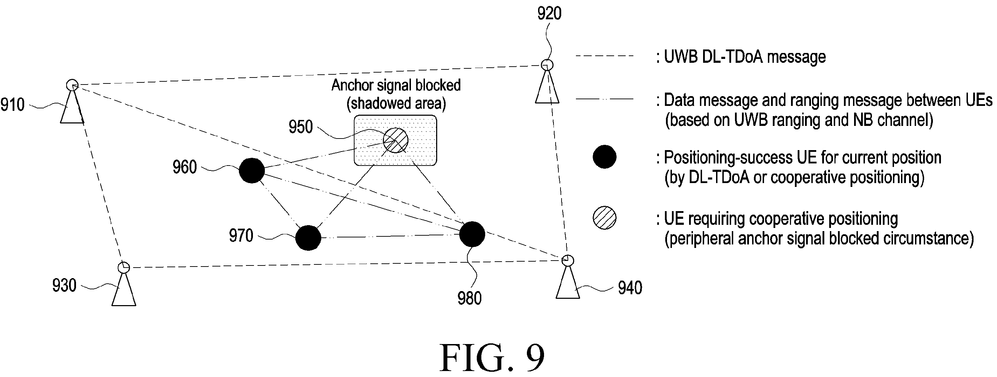

FIG. 9 illustrates an example in which a UWB device failing in positioning performs cooperative positioning using an NB channel according to an embodiment of the disclosure.

Referring to FIG. 9, each of the plurality of UWB anchors 910 to 940 in the cluster may transmit and receive a UWB DL-TDoA message, and each of the plurality of UWB devices 950 to 980 may transmit and receive a ranging message and/or a data message using a narrow band (NB) channel.

In the disclosure, the NB channel may be a channel having a narrower bandwidth than the UWB channel. According to an embodiment, the NB channel may be a channel allocated for a communication technology other than UWB communication. According to an embodiment, the NB channel may be a subchannel of one of the candidate UWB channels allocated for UWB communication. According to an embodiment, the NB channel may be used for advertising, device discovery, and/or connection setup for additional parameter negotiation/authentication. For example, the NB channel may be used for transmission and reception of an advertisement message, an additional advertising message, a connection request message, and/or a connection confirmation message.

According to an embodiment, anchor signals (e.g., poll DTM, response DTM, or final DTM) may be transmitted and received between the plurality of UWB anchors 910 to 940 in the cluster.

According to an embodiment, the first UWB device 950 may receive (or overhear) anchor signals (e.g., poll DTM, response DTM, or final DTM) between the plurality of UWB anchors 910 to 940, and calculate TDoA values through the information included in the message and the reception timestamp to attempt positioning for its current position. When the first UWB device 950 does not receive a sufficient number of anchor signals required for positioning calculation, the first UWB device 950 may fail in positioning for the current position.

According to an embodiment, the first UWB device 950 may request cooperative positioning from at least one of the peripheral devices 960 to 980 using the NB channel. The first UWB device 950 may exchange position information and/or scheduling information with at least one of the peripheral devices 960 to 980. The first UWB device 950 may perform ranging in the UWB channel using information (scheduling information, UE position) obtained from the NB channel. The first UWB device 950 may attempt positioning for its current position based on a ranging result value on the UWB channel and/or a result value of performing DL-TDoA using at least one of the UWB anchors 910 to 940 as a positioning infrastructure.

Each of the first UWB device to fourth UWB device 960 to 980 may receive (or overhear) anchor signals (e.g., poll DTM, response DTM, or final DTM) between the plurality of UWB anchors 910 to 940, and calculate TDoA values through the information included in the message and the reception timestamp. Each of the second to fourth UWB devices 960 to 980 may obtain (or estimate) a position thereof using the calculated TDoA values. Accordingly, each of the second UWB device to the fourth UWB device 960 to 980 may estimate its position without exposing its position and succeed in positioning for the current position.

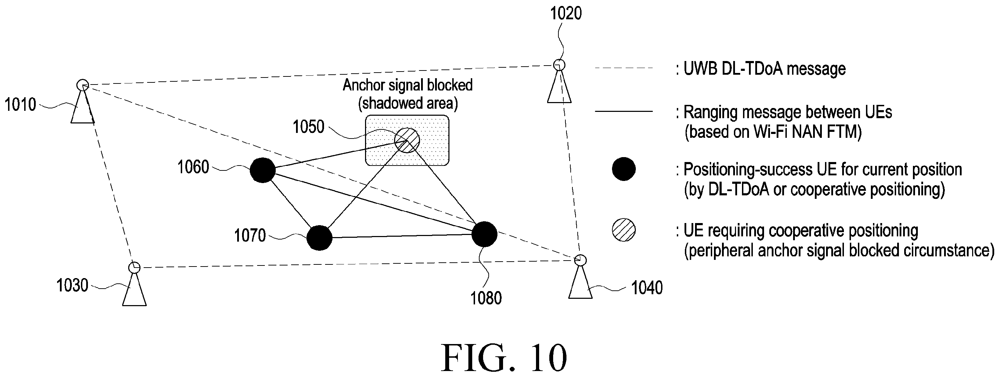

FIG. 10 illustrates an example in which a UWB device failing in positioning performs cooperative positioning using a Wi-Fi NAN according to an embodiment of the disclosure.

Referring to FIG. 10, each of the plurality of UWB anchors 1010 to 1040 in the cluster may transmit and receive a UWB DL-TDoA message, and each of the plurality of UWB devices 1050 to 1080 may transmit and receive a ranging message and/or a data message using Wi-Fi neighbor awareness networking (NAN)-based fine time measurement (FTM).

According to an embodiment, anchor signals (e.g., poll DTM, response DTM, or final DTM) may be transmitted and received between the plurality of UWB anchors 1010 to 1040 in the cluster.

According to an embodiment, the first UWB device 1050 may receive (or overhear) anchor signals (e.g., poll DTM, response DTM, or final DTM) between the plurality of UWB anchors 1010 to 1040, and calculate TDoA values through the information included in the message and the reception timestamp to attempt positioning for its current position. When the first UWB device 1050 does not receive a sufficient number of anchor signals required for positioning calculation, the first UWB device 1050 may fail in positioning for the current position.

According to an embodiment, the first UWB device 1050 may request cooperative positioning from at least one of the peripheral devices 1060 to 1080 using the Wi-Fi NAN-based FTM. The first UWB device 1050 may exchange position information and/or scheduling information with at least one of the peripheral devices 1060 to 1080. The first UWB device 1050 may attempt positioning for its current position based on a ranging result value obtained through Wi-Fi NAN-based FTM and/or a result value of performing DL-TDoA using at least one of the UWB anchors 1010 to 1040 as a positioning infrastructure.

Each of the first UWB device to fourth UWB device 1060 to 1080 may receive (or overhear) anchor signals (e.g., poll DTM, response DTM, or final DTM) between the plurality of UWB anchors 1010 to 1040, and calculate TDoA values through the information included in the message and the reception timestamp. Each of the second to fourth UWB devices 1060 to 1080 may obtain (or estimate) a position thereof using the calculated TDoA values. Accordingly, each of the second UWB device to the fourth UWB device 1060 to 1080 may estimate its position without exposing its position and succeed in positioning for the current position.

In Wi-Fi-NAN, procedures required to support the steps of 1) discovering a peripheral UE, 2) configuring a NAN cluster, and then 3) performing FTM-based ranging are defined.

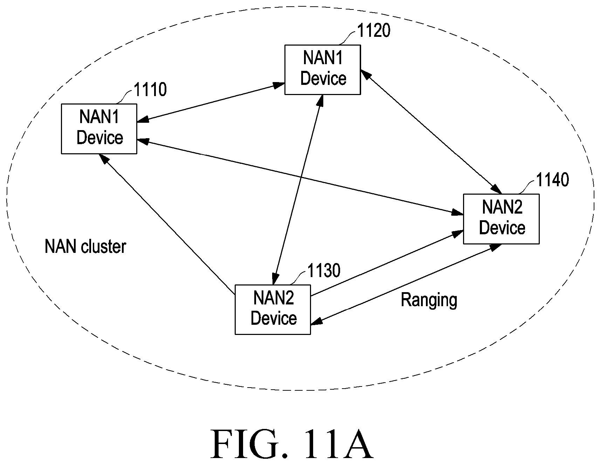

FIG. 11A is a view illustrating a Wi-Fi NAN ranging architecture according to an embodiment of the disclosure.

Referring to FIG. 11A, a nan cluster may include first to fourth NAN devices 1110 to 1140, and for example, the third NAN device 1130 and the fourth NAN device 1140 may perform FTM-based ranging.

NAN ranging may be performed between two NAN devices to determine the distance between the two NAN devices in the nan cluster. In order to perform NAN ranging, NAN devices may configure one or more time blocks for executing the distance measurement protocol. The distance between the two NAN devices may be estimated using the FTM protocol.

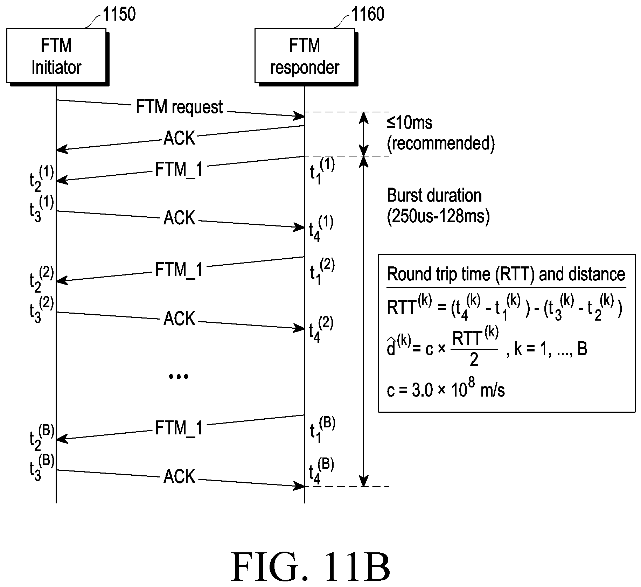

FIG. 11B illustrates an example of performing FTM-based ranging according to an embodiment of the disclosure.

Referring to FIG. 11B, a fine time measurement (FTM) protocol may be performed between two NAN devices to determine the distance between the two NAN devices 1150 and 1160 within the nan cluster.

One of the two NAN devices for determining the distance in the nan cluster may operate as an FTM initiator 1150, and the other may operate as an FTM responder 1160.

The FTM initiator 1150 may transmit an FTM request message to the FTM responder 1160, and the FTM responder 1160 may transmit an ACK message for the FTM request message to the FTM initiator 1150.

The FTM responder 1160 may transmit an FTM_1 message to the FTM initiator 1150, and the FTM initiator 1150 may transmit an ACK message for the FTM_1 message to the FTM responder 1160. The FTM responder 1160 may transmit an FTM_2 message to the FTM initiator 1150, and the FTM initiator 1150 may transmit an ACK message for the FTM_2 message to the FTM responder 1160.

The FTM initiator 1150 and the FTM responder 1160 exchange FTM messages and ACK messages therefor, to calculate the round trip time (RTT) and distance between the two.

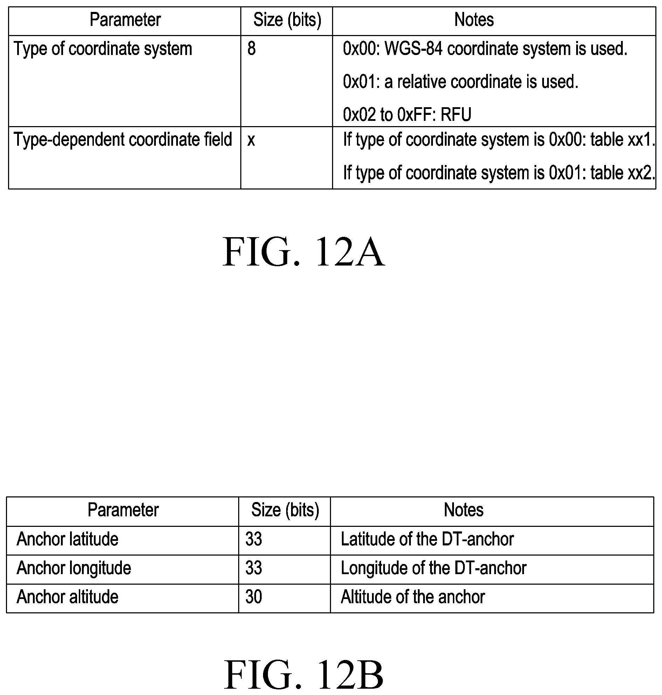

FIGS. 12A to 12D illustrate examples of a message field regarding anchor location information according to an embodiment of the disclosure.

Referring to FIG. 12A, an example of anchor location information included in the Poll DTM or response DTM is shown. The anchor location information in the poll DTM or response DTM may include the "type of coordinate system" parameter and the "type-depending coordinate field" parameter.

The "type of coordinate system" parameter may indicate the type of coordinate system, and may consist of, e.g., 8 bits. For example, if the "type of coordinate system" parameter is "0x00", the type of coordinate system may be WGS-84 coordinate system. For example, if the "type of coordinate system" parameter is "0x01", the type of coordinate system may be relative coordinate.

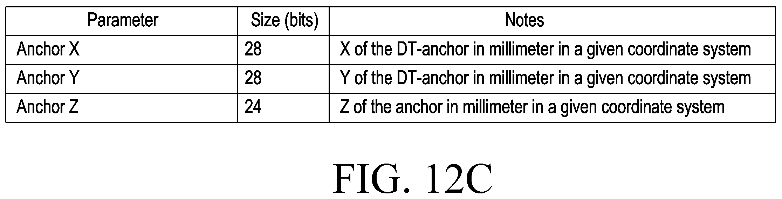

The type-dependent coordinate field refers to the coordinate field according to the type of coordinate system indicated by the "type of coordinate system" parameter. For example, if the "type of coordinate system" parameter is "0x00", the "type-dependent coordinate field" of FIG. 12B may be used. For example, if the "type of coordinate system" parameter is "0x01", the "type-dependent coordinate field" of FIG. 12C may be used.

Referring to FIG. 12B, an example of the type-dependent coordinate field included in the poll DTM or response DTM of FIG. 12A is shown.

If the "type-dependent coordinate field" is WGS-84 format, the "type-dependent coordinate field" may include an anchor latitude, anchor longitude, and anchor altitude field. The anchor latitude field may represent the latitude of the DT anchor, the anchor longitude field may represent the longitude of the DT anchor, and the anchor altitude field may represent the altitude of the anchor.

Referring to FIG. 12C, an example of the type-dependent coordinate field included in the poll DTM or response DTM of FIG. 12A is shown.

If the "type-dependent coordinate field" of FIG. 12B is a (X, Y, Z) coordinate format, the "type-dependent coordinate field" may include anchor X, anchor Y, and anchor Z fields. The anchor X field represents the X coordinate value in millimeters in the given coordinate system, the anchor Y field represents the Y coordinate value in millimeters in the given coordinate system, and the anchor Z field represents the Z coordinate value in millimeters in the given coordinate system.

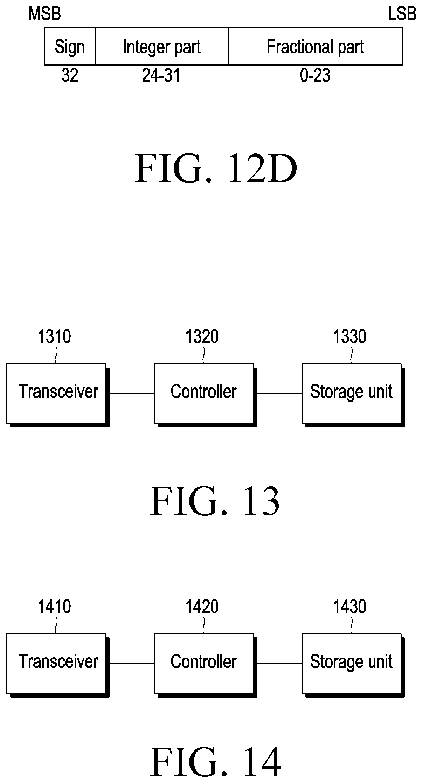

Referring to FIG. 12D, an example of the anchor latitude and anchor longitude bit format of FIG. 12B is shown.

Referring to FIGS. 12B and 12D, each of the anchor latitude parameter and the anchor longitude parameter may be configured of 33 bits. Referring to FIG. 12D, LSB 0-23 in the anchor latitude parameter (or anchor longitude parameter) may be configured of a fractional part, LSB 24-31 may be configured of an interior part, and LSB 32 may be configured of a sign.

FIG. 13 illustrates a structure of a first UWB device according to an embodiment of the disclosure.

The first UWB device of FIG. 13 may be any one of the positioning-failure UE of FIG. 6, the positioning-failure UE of FIG. 7, the first UWB device 850 of FIG. 8, the first UWB device 950 of FIG. 9, and the first UWB device 1050 of FIG. 10.

Referring to FIG. 13, the first UWB device may include a transceiver 1310, a controller 1320, and a storage unit 1330. In the disclosure, the controller may be defined as a circuit or application-specific integrated circuit or at least one processor.

The transceiver 1310 may transmit and receive signals to and from other entities, and may also be referred to as a transmission/reception unit.

The controller 1320 may control the overall operation of the UWB device (or UE) according to an embodiment proposed in the disclosure and may also be referred to as a processor. For example, the controller 1320 may control inter-block signal flow to perform the operations according to the above-described flowchart. Specifically, the controller 1320 may control the operations of the first UWB device described above with reference to FIGS. 1 to 12C.

The controller 1320 may control to receive a downlink time difference of arrival (DL-TDoA) message from at least one UWB anchor through a UWB channel. The controller 1320 may identify a failure in position measurement of the first UWB device based on the DL-TDoA message. The controller 1320 may control to receive, from a second UWB device, a ranging message including position information about the second UWB device. The controller 1320 may measure a position of the first UWB device based on the position information about the second UWB device and the DL-TDoA message.

The controller 1320 may control to transmit a message requesting cooperative positioning to the second UWB device.

According to an embodiment, the ranging message may be received through the UWB channel. According to an embodiment, the ranging message may be received through a narrow band (NB) channel. According to an embodiment, the ranging message may be received through Wi-Fi neighbor awareness networking (NAN)-based fine time measurement (FTM).

According to an embodiment, the position information about the second UWB device may include a latitude of the second UWB device, a longitude of the second UWB device, and an altitude of the second UWB device. According to an embodiment, the position information about the second UWB device may include an X-coordinate value in millimeters in a set coordinate system, a Y-axis coordinate value in millimeters in the coordinate system, and a Z-axis value in millimeters in the coordinate system.

The storage unit 1330 may store at least one of information transmitted/received via the transceiver 1310 and information generated via the controller 1320. For example, the storage unit 1330 may store information and data necessary for the method described above with reference to FIGS. 1 to 12D.

FIG. 14 illustrates a structure of a second UWB device according to an embodiment of the disclosure.

The second UWB device of FIG. 14 may be the positioning-success UE of FIG. 6, the positioning-success UE of FIG. 7, any one of the second to fourth UWB devices 860 to 880 of FIG. 8, any one of the second to fourth UWB devices 960 to 980 of FIG. 9, or any one of the second to fourth UWB devices 1060 to 1080 of FIG. 10.

Referring to FIG. 14, the second UWB device may include a transceiver 1410, a controller 1420, and a storage unit 1430. In the disclosure, the controller may be defined as a circuit or application-specific integrated circuit or at least one processor.

The transceiver 1410 may transmit and receive signals to and from other entities, and may also be referred to as a transmission/reception unit.

The controller 1420 may control the overall operation of the UWB device (or UE) according to an embodiment proposed in the disclosure and may also be referred to as a processor. For example, the controller 1420 may control inter-block signal flow to perform the operations according to the above-described flowchart. Specifically, the controller 1420 may control the operations of the second UWB device described above with reference to FIGS. 1 to 12C.

The controller 1420 may control to receive a downlink time difference of arrival (DL-TDoA) message from at least one UWB anchor through a UWB channel. The controller 1420 may identify a success in position measurement of the second UWB device based on the DL-TDoA message. The controller 1420 may control to transmit a ranging message including position information about the second UWB device to a first UWB device failing in position measurement based on the DL-TDoA message.

The controller 1420 may control to receive a message requesting cooperative positioning from the first UWB device.

The storage unit 1430 may store at least one of information transmitted/received via the transceiver 1410 and information generated via the controller 1420. For example, the storage unit 1430 may store information and data necessary for the method described above with reference to FIGS. 1 to 12D.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method by a first ultra wide band (UWB) device, comprising:
receiving a downlink time difference of arrival (DL-TDoA) message from at least one UWB anchor through a UWB channel;
identifying a failure in position measurement of the first UWB device based on the DL-TDoA message;
receiving, from a second UWB device, a ranging message including position information about the second UWB device; and
measuring a position of the first UWB device based on the position information about the second UWB device and the DL-TDoA message.

2. The method of claim 1, further comprising transmitting a message requesting cooperative positioning to the second UWB device.

3. The method of claim 1, wherein the ranging message is received through the UWB channel, the ranging message is received through a narrow band (NB) channel, or the ranging message is received through Wi-Fi neighbor awareness networking (NAN)-based fine time measurement (FTM).

4. The method of claim 1, wherein the position information about the second UWB device includes a latitude of the second UWB device, a longitude of the second UWB device, and an altitude of the second UWB device.

5. The method of claim 1, wherein the position information about the second UWB device includes an X-coordinate value in millimeters in a set coordinate system, a Y-axis coordinate value in millimeters in the coordinate system, and a Z-axis value in millimeters in the coordinate system.

6. A method by a second ultra wide band (UWB) device, comprising:
receiving a downlink time difference of arrival (DL-TDoA) message from at least one UWB anchor through a UWB channel;
identifying a success in position measurement of the second UWB device based on the DL-TDoA message; and
transmitting a ranging message including position information about the second UWB device to a first UWB device failing in position measurement based on the DL-TDoA message.

7. The method of claim 6, further comprising receiving a message requesting cooperative positioning from the first UWB device.

8. The method of claim 6, wherein the ranging message is transmitted through the UWB channel, the ranging message is transmitted through a narrow band (NB) channel, or the ranging message is transmitted through Wi-Fi neighbor awareness networking (NAN)-based fine time measurement (FTM).

9. The method of claim 6, wherein the position information about the second UWB device includes a latitude of the second UWB device, a longitude of the second UWB device, and an altitude of the second UWB device.

10. The method of claim 6, wherein the position information about the second UWB device includes an X-coordinate value in millimeters in a set coordinate system, a Y-axis coordinate value in millimeters in the coordinate system, and a Z-axis value in millimeters in the coordinate system.

11. A first ultra wide band (UWB) device, comprising:
a transceiver; and
a processor, wherein the processor configured to:
receive a downlink time difference of arrival (DL-TDoA) message from at least one UWB anchor through a UWB channel;
identify a failure in position measurement of the first UWB device based on the DL-TDoA message;
receive, from a second UWB device, a ranging message including position information about the second UWB device; and
measure a position of the first UWB device based on the position information about the second UWB device and the DL-TDoA message.

12. The first UWB device of claim 11, wherein the processor is configured to control to transmit a message requesting cooperative positioning to the second UWB device.

13. The first UWB device of claim 11, wherein the ranging message is received through the UWB channel, the ranging message is received through a narrow band (NB) channel, or the ranging message is received through Wi-Fi neighbor awareness networking (NAN)-based fine time measurement (FTM).

14. A second ultra-wide band (UWB) device, comprising:
a transceiver; and
a processor, wherein the processor configured to:
receive a downlink time difference of arrival (DL-TDoA) message from at least one UWB anchor through a UWB channel;
identify a success in position measurement of the second UWB device based on the DL-TDoA message; and
transmit a ranging message including position information about the second UWB device to a first UWB device failing in position measurement based on the DL-TDoA message.

15. The second UWB device of claim 14, wherein the ranging message is transmitted through the UWB channel, the ranging message is transmitted through a narrow band (NB) channel, or the ranging message is transmitted through Wi-Fi neighbor awareness networking (NAN)-based fine time measurement (FTM).
